# EUROPEAN PATENT APPLICATION

(11) **EP 4 549 081 A1**
(43) Date of publication of application: **07.05.2025**
(21) Application number: 23831205.2
(22) Date of filing: 20.06.2023
(51) Int. Cl.: B23Q 1/01

(54) **COLUMN AND MACHINE TOOL**

(30) Priority: 30.06.2022 JP 2022106458
(71) Applicant: BROTHER KOGYO KABUSHIKI KAISHA, Nagoya-shi, Aichi 467-8561 (JP)
(72) Inventor: AMANO, Masahito, Nagoya-shi, Aichi 467-8562 (JP)
(74) Representative: Becker, Eberhard
(86) International application number: PCT/JP2023/022735
(87) International publication number: WO 2024/004759

(57) **Abstract**

Provided is a column that achieves a reduction in displacement due to torsion and a machine tool. In this machine tool, a spindle head extends in the Z-axis direction and is disposed on the front surface of a column 5 through a Y-axis moving mechanism. A rotary table is located forward of the spindle head. The spindle head is movable in the Y-axis direction (up-down direction) by being guided by a pair of guides 24 that are mounted on mounting surfaces 52R, 52L of the column 5. The mounting surface 52R is located at a left front end of a right wall 51A. The mounting surface 52L is located at a right front end of a left wall 51B. The column 5 is movable in the Z-axis direction (front-back direction) through sliding members 57, 58 thereof being guided by a pair of guides. The sliding member 57 has a portion located further forward than the mounting surfaces 52R, 52L in a plan view.

## Description

### BACKGROUND

### Technical Field

The present invention relates to a column and a machine tool.

### Related Art

Patent Document 1 discloses a lateral machine tool that performs cutting and other machining on a workpiece fixed on a rotary table by using a spindle that extends horizontally. A carriage that is movable in the X-axis (left and right) direction is provided on the base of the machine tool. A column that is movable in the Z-axis (front-back) direction is provided on the carriage. A spindle head that is movable in the Y-axis (up and down) direction relative to the column is provided. A spindle is rotatably supported on the spindle head, and a tool is mounted on the spindle.

### Citation List

### Patent Document

Patent Document 1: Japanese Patent Application Laid-Open No. 8-108340

### SUMMARY

### Technical Problem

A column movably supports the spindle head in the Y-axis direction. When a workpiece is machined, the column receives a reaction force from the workpiece via the tool, the spindle, and the spindle head. The column may twist horizontally relative to the base due to reaction forces. If the column twists horizontally, the tool will shift position relative to the workpiece. If the displacement due to torsion is large, the machine tool may not be able to machine the workpiece with high precision.

An object of the present invention is to provide a column and a machine tool capable of reducing displacement due to torsion.

### Solution to Problem

A column according to claim 1 is disposed at an interval from a workbench that fixes a work material on an upper side of a foundation of a machine tool and supports a spindle head that holds a spindle. The column includes: a mounting surface disposed on a surface facing the workbench for mounting an up-down guide portion that guides a movement of the spindle head in an up-down direction; and an intersection guide portion disposed on a lower wall and guiding a movement of the column in an intersecting direction intersecting the up-down direction, in which in a plan view, at least a portion of the intersection guide portion is closer to the workbench than the mounting surface. In the column, compared with the case where at least a portion of the intersection guide portion is not positioned closer to the workbench than the mounting surface in a plan view, the position of the rotation center of the torsion relative to the foundation is closer to the workbench side. At this time, the distance from the rotation center of the torsion to the tip of the tool becomes shorter. Therefore, the column may reduce displacement due to torsion during machining.

In the column according to claim 2, the intersection guide portion includes a first intersection guide portion, and a second intersection guide portion disposed further on an opposite side to the workbench than the first intersection guide portion, in which in a plan view, the first intersection guide portion may be closer to the workbench than the mounting surface. The column is disposed with the first intersection guide portion and the second intersection guide portion with the mounting surface therebetween. This allows the first intersection guide portion and the second intersection guide portion to guide the column more stably compared to the case where both are positioned closer to the workbench than the mounting surface. Therefore, the column can move stably in the intersecting direction.

In the column according to claim 3, the lower wall has a protruding portion that protrudes toward the workbench further than the mounting surface, and the protruding portion is supported from below by the first intersection guide portion, and an upper end thereof may be inclined downward toward the workbench. Since the upper end of the protruding portion is inclined downward toward the workbench, the column can be supported without reducing rigidity. Therefore, the column can move stably in the intersecting direction.

A machine tool according to claim 4 includes the column according to claim 3. Therefore, the machine tool can obtain the same effect as that of claim 3.

In the machine tool according to claim 5, the spindle may extend horizontally. In the case where the spindle extends horizontally, the torsional displacement at the tip of the tool becomes large when torsion occurs. In the machine tool, the distance from the rotation center of the torsion to the tip of the tool becomes shorter. Therefore, the machine tool can reduce displacement due to torsion during machining, even when the axial direction is horizontal.

### BRIEF DESCRIPTION OF THE DRAWINGS

[FIG. 1] a perspective view of a machine tool 1 (spindle head 6: raised).
[FIG. 2] a perspective view of the machine tool 1 (spindle head 6: lowered).
[FIG. 3] a right side view of the machine tool 1 (spindle head 6: raised).
[FIG. 4] a right side view of the machine tool 1 (spindle head 6: lowered).
[FIG. 5] a plan view of the machine tool 1.
[FIG. 6] a perspective view of a column 5.
[FIG. 7] a right side view of the column 5.
[FIG. 8] a plan view of the column 5
[FIG. 9] an explanatory diagram of torsion of columns 5 and 60 when machining a workpiece 99.

### DESCRIPTION OF THE EMBODIMENTS

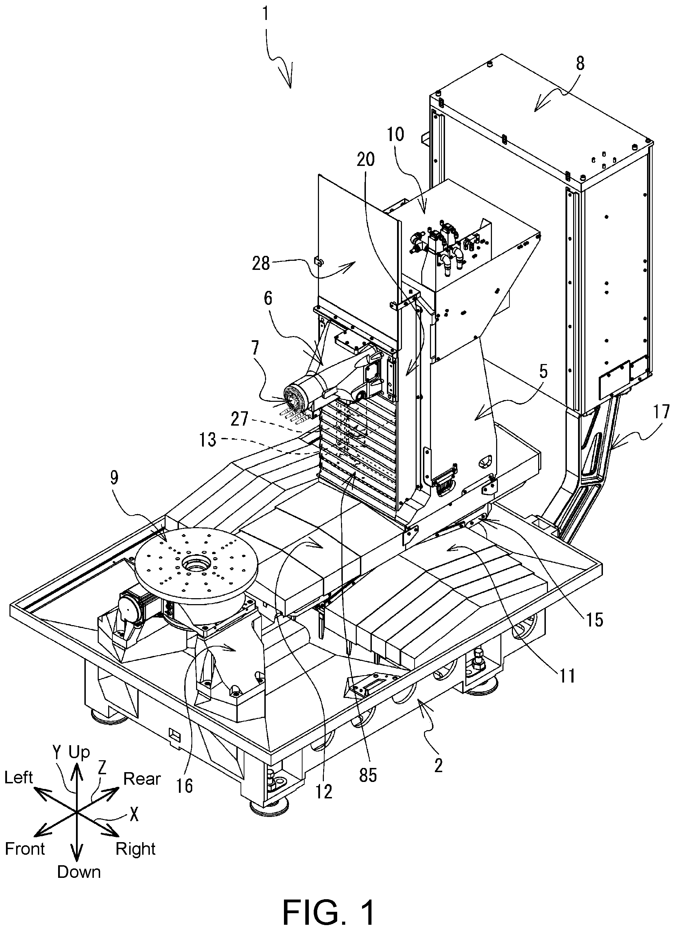

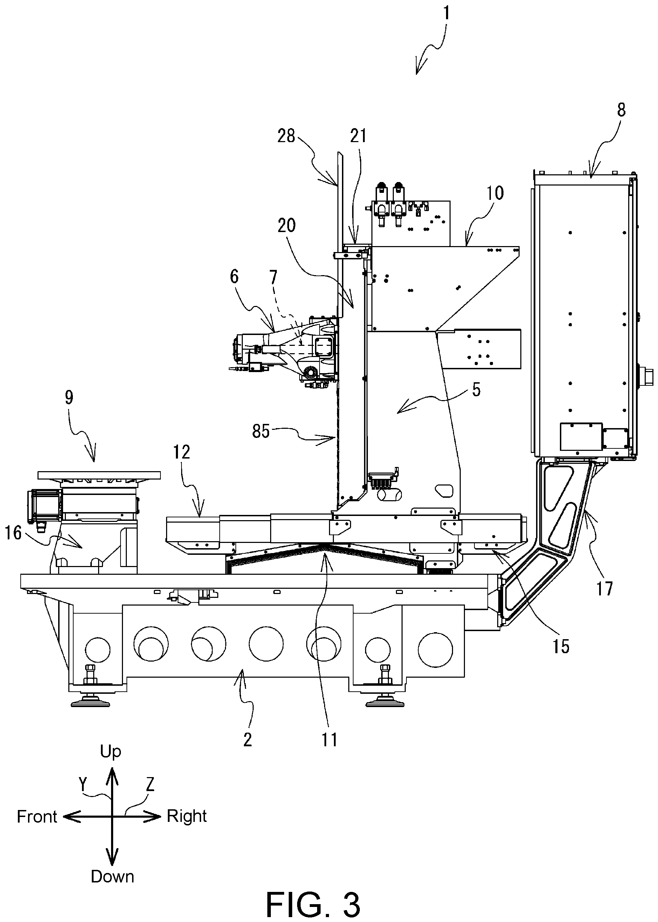

An embodiment of the present invention will now be described. In the following description, arrows in the drawings will be used to indicate left and right, front and back, and up and down. The left-right direction, the up-down direction, and the front-back direction of the machine tool 1 correspond to the X-axis direction, the Y-axis direction, and the Z-axis direction of the machine tool 1, respectively. The machine tool 1 shown in FIG. 1 is of a lateral type in which a spindle 7 (see FIG. 3) to be described below extends in the front-back direction (Z-axis direction), and a column 5 to be described below moves in the X-axis direction and the Z-axis direction.

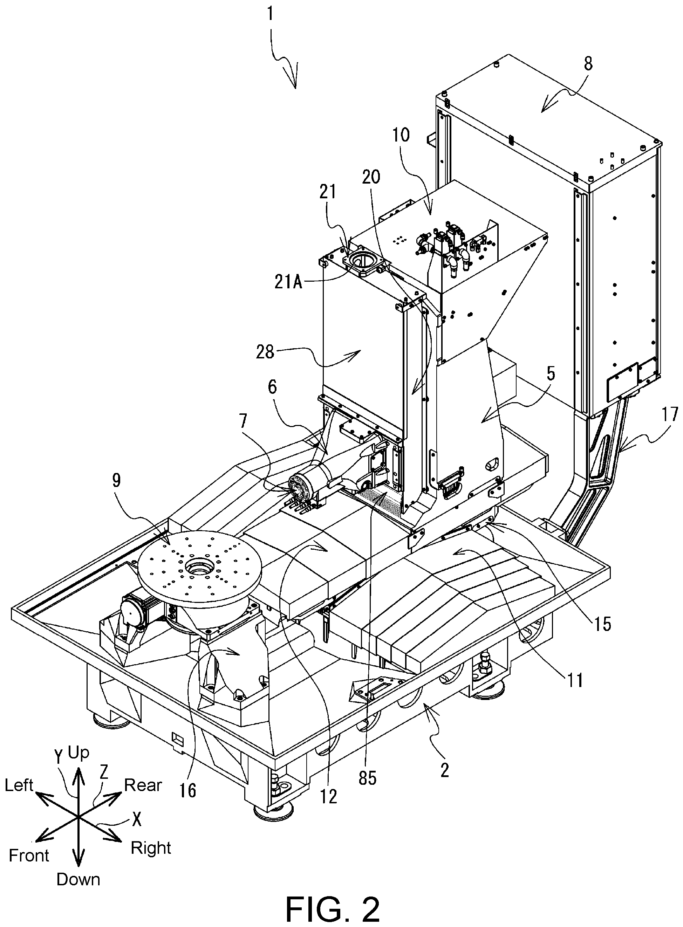

The structure of the machine tool 1 will be described with reference to FIG. 1 to FIG. 5. As shown in FIG. 1 and FIG. 2, the machine tool 1 includes a base 2, the column 5, frame covers 10, 20, a spindle head 6, the spindle 7 (see FIG. 3), a control box 8, a rotary table 9, an X-axis moving mechanism 11, a Z-axis moving mechanism 12, a Y-axis moving mechanism 13, etc. The base 2 is an iron foundation having a substantially rectangular parallelepiped shape that is elongated in the Z-axis direction. The X-axis moving mechanism 11 is disposed at the rear portion of the upper surface of the base 2 and movably supports a moving body 15 in the X-axis direction. The Z-axis moving mechanism 12 is disposed on the upper surface of the moving body 15 and movably supports the column 5 in the Z-axis direction.

The column 5 extends in the up-down direction. The detailed structure of the column 5 will be described later. A frame cover 10 is mounted on the upper portion of the column 5. The frame cover 10 is a frame body having a rectangular shape in a plan view, and covers the column 5 from the outside. A frame cover 20 is mounted on the front surface of the column 5. The frame cover 20 is a frame body having a vertically elongated rectangular shape when viewed from the front, and covers the gap between the column 5 and the spindle head 6 to be described below from the outside. The upper surface of the frame cover 20 is provided with a hole that corresponds to the outer peripheral shape of a pedestal 21, which will be described later. The Y-axis moving mechanism 13 is disposed on the front surface of the column 5 and movably supports the spindle head 6 in the Y-axis direction.

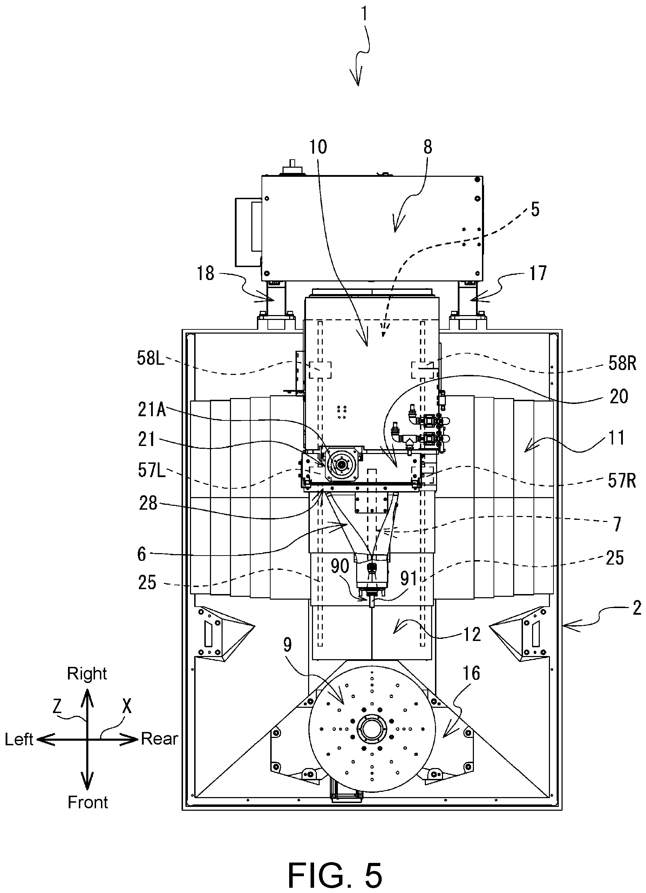

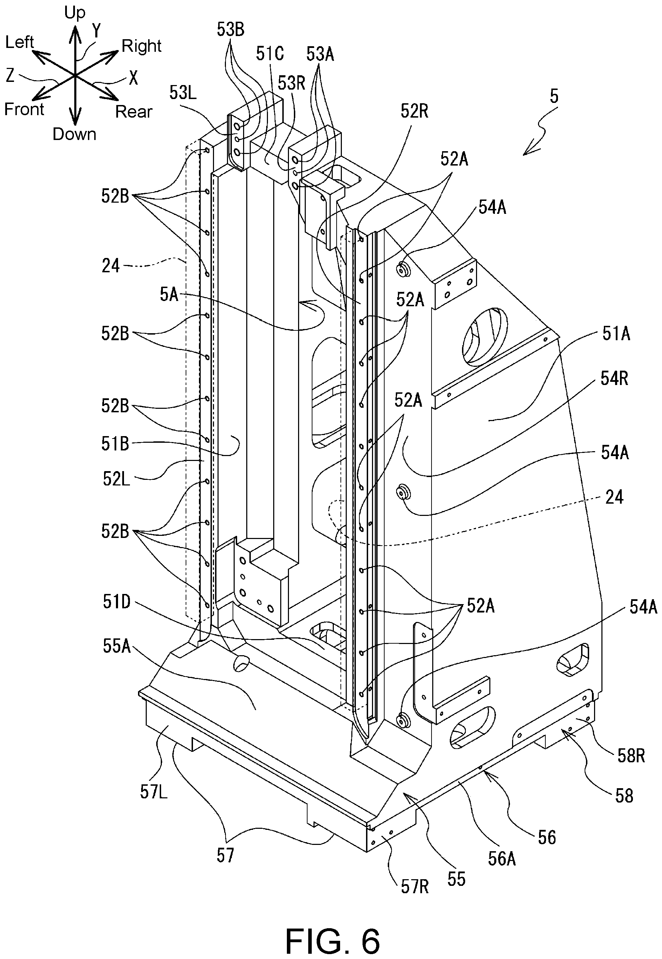

The X-axis moving mechanism 11 includes a pair of guides, a ball screw, and an X-axis motor. The Z-axis moving mechanism 12 includes a pair of guides 25 (see FIG. 5), a ball screw, and a Z-axis motor. The pair of guides 25 are rail-shaped and extend in the front-back direction, and are disposed at an interval from each other in the left-right direction. The Y-axis moving mechanism 13 includes a pair of guides 24 (see FIG. 6), a ball screw 27 (see FIG. 1), and a Y-axis motor. The pair of guides 24 are rail-shaped and extend in the up-down direction, and are mounted on the front side of the column 5 at an interval from each other in the left-right direction (see FIG. 6). The X-axis moving mechanism 11, the Z-axis moving mechanism 12, and the Y-axis moving mechanism 13 move the target parts (the moving body 15, the column 5, the spindle head 6) along each guide using the power of each motor.

The frame cover 20 has the pedestal 21 on its upper portion. The pedestal 21 has a substantially rectangular shape in a plan view. The pedestal 21 has a support hole 21A that passes through its upper surface in the up-down direction. A Y-axis motor of the Y-axis moving mechanism 13 (see FIG. 1) is inserted and fixed in the support hole 21A. The rotation shaft of the Y-axis motor protrudes downward inside the frame cover 20 and is connected to the upper end portion of the ball screw 27 (see FIG. 1).

As shown in FIGS. 1 to 4, the spindle head 6 extends in the Z-axis direction, and is disposed movably in the Y-axis direction along the front surface of the column 5 by the Y-axis moving mechanism 13. The spindle head 6 includes an upper cover 28 and a lower cover 85. The upper cover 28 is a metal plate having a substantially rectangular shape when viewed from the front. The lower end portion of the upper cover 28 is fixed to the rear end portion of the upper surface of the spindle head 6.

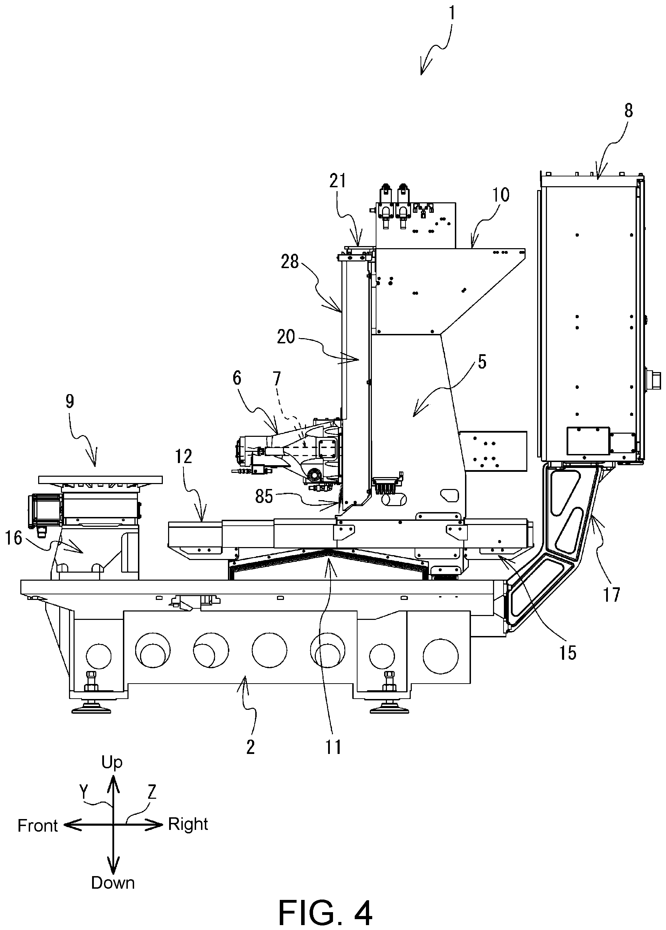

The upper cover 28 extends upward from the rear end portion of the upper surface of the spindle head 6. The upper cover 28 is disposed on the front side of the frame cover 20 and the pedestal 21 (see FIGS. 3 and 4). The upper cover 28 moves up and down integrally with the spindle head 6, thereby constantly covering from the front an area of the front surface of the column 5 that is further on an upper side than the spindle head 6. The lower cover 85 is fixed in a suspended state to the rear end portion of the lower surface of the spindle head 6. The lower cover 85 includes a plurality of metal plates arranged in the up-down direction, and expands and contracts in the up-down direction according to the height of the spindle head 6, thereby constantly covering from the front an area of the front surface of the column 5 that is further on the lower side than the spindle head 6 (see FIGS. 1 and 2).

As shown in FIGS. 3 and 4, the spindle 7 is disposed within the spindle head 6 and extends in the Z-axis direction. The spindle head 6 rotatably supports the spindle 7. The rear portion of the spindle head 6 holds a spindle motor (not shown). An output shaft of the spindle motor extends forward and is coaxially connected to the rear end portion of the spindle 7. When driven by the spindle motor, the spindle 7 rotates around the Z axis. A tool holder 90 (see FIG. 5) is detachably mounted on the spindle 7. The tool holder 90 holds a tool 91 at its front side.

The base 2 includes a pair of support members 17, 18 (see FIG. 5) at the rear portion. The support members 17, 18 are spaced apart from each other in the left-right direction, extend upward, and support the control box 8 from below. The control box 8 houses a control panel (not shown) therein. The control panel controls the operation of the machine tool 1.

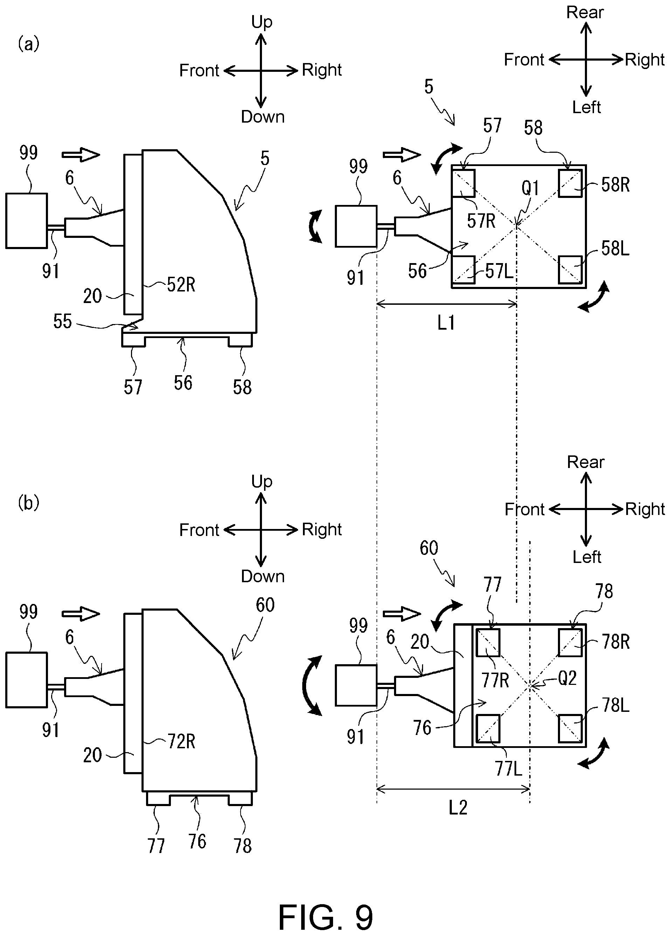

The base 2 includes a fix stand 16 on the front side of the upper surface. The fix stand 16 is disposed on the front side of the X-axis moving mechanism 11. The rotary table 9 is rotatably supported by the fix stand 16. The rotary table 9 is located in front of the spindle head 6. The rotary table 9 has a workpiece 99 (see FIG. 9) fixed to its upper surface by a jig (not shown), and is rotatable 360° about a rotation axis parallel to the Y-axis direction.

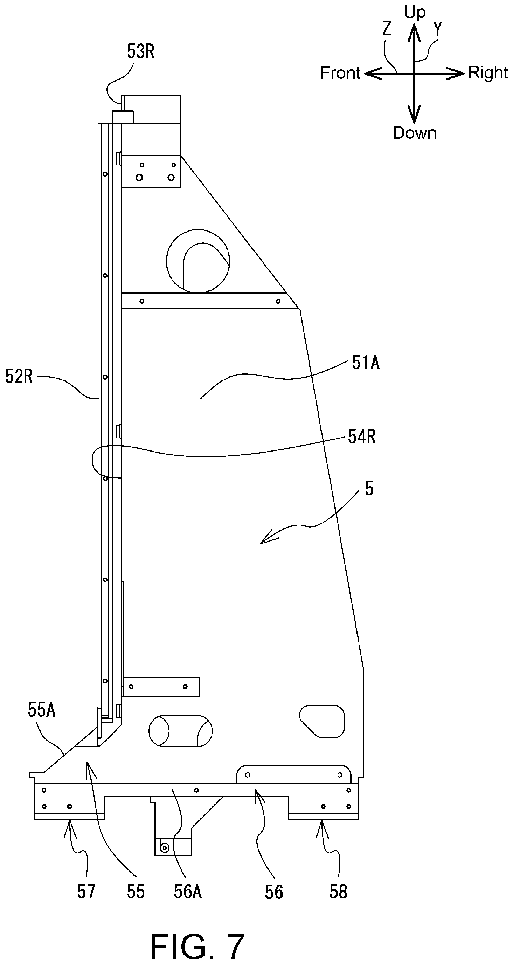

The structure of the column 5 will be described with reference to FIG. 6 to FIG. 8. The column 5 is a rectangular cylinder having a vertically elongated rectangular shape when viewed from the front. The column 5 has a right wall 51A, a left wall 51B, an upper wall 51C, and a lower wall 51D. The column 5 has a through hole 5A surrounded by the right wall 51A, the left wall 51B, the upper wall 51C, and the lower wall 51D. The through hole 5A has a vertically elongated rectangular shape when viewed from the front.

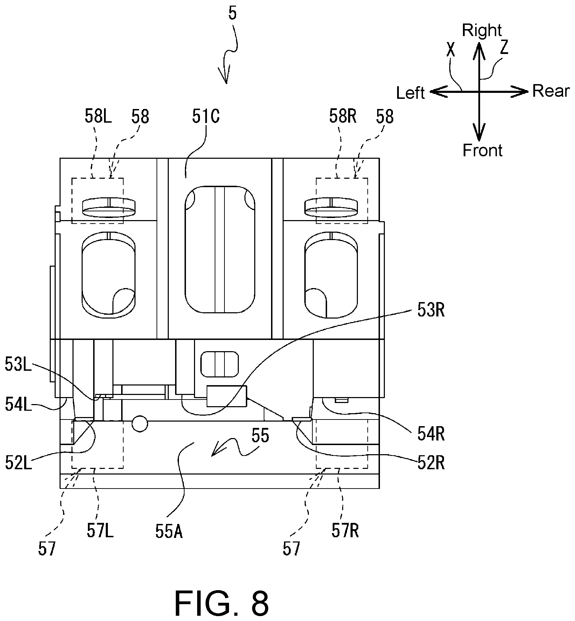

The right wall 51A has a mounting surface 52R and a mounting surface 54R. The mounting surface 52R is disposed at the left front end of the right wall 51A. The mounting surface 54R is disposed at the right front end of the right wall 51A and to the right side of the mounting surface 52R. The mounting surface 54R is located further rearward than the mounting surface 52R (see FIG. 8). The mounting surfaces 52R and 54R are each have a vertically elongated rectangle shape when viewed from the front.

The mounting surface 52R has a plurality of screw holes 52A aligned in the up-down direction. One of the pair of guides 24 is mounted on the mounting surface 52R by screwing the screws into the screw holes 52A. The mounting surface 54R has a plurality of screw holes 54A aligned in the up-down direction. The frame cover 20 is mounted on the mounting surface 54R by screwing the screws into the screw holes 54A.

A mounting surface 52L is disposed at the right front end of the left wall 51B. The mounting surface 52R and the mounting surface 52L are aligned at the same position in the front-back direction. A mounting surface 54L is located further rearward than the mounting surface 52L (see FIG. 8). The mounting surface 54L is disposed at the left front end of the left wall 51B and to the left side of the mounting surface 52L. The mounting surface 54L is located further rearward than the mounting surface 52L (see FIG. 8). The mounting surfaces= 54R and the mounting surface 54L are aligned at the same position in the front-back direction. The mounting surfaces 52L, 54L are each have a vertically elongated rectangle shape when viewed from the front.

The mounting surface 52L is formed with a plurality of screw holes 52B aligned in the up-down direction. The other of the pair of guides 24 is mounted on the mounting surface 52L by screwing the screws into the screw holes 52B. The mounting surface 54L has a plurality of screw holes (not shown) aligned in the up-down direction. The frame cover 20 is mounted on the mounting surface 54L by screwing the screws into the screw holes.

Mounting surfaces 53R and 53L are disposed on the upper wall 51C. The mounting surface 53R is disposed on the upper left side of the mounting surface 52R. The mounting surface 53L is disposed on the upper right side of the mounting surface 52L. As shown in FIG. 8, the mounting surface 53R is located further rearward than the mounting surface 52R, and the mounting surface 53L is located further rearward than the mounting surface 52L. The mounting surface 53R and the mounting surface 53L are aligned at the same position in the front-back direction. The mounting surface 53R and the mounting surface 53L each have a vertically elongated rectangular shape when viewed from the front. The mounting surface 53R has a plurality of screw holes 53A. The mounting surface 53L has a plurality of screw holes 53B. The pedestal 21 is mounted on the mounting surface 53R by screwing the screws into the screw holes 53A. The pedestal 21 is mounted on the mounting surface 53L by screwing the screws into the screw holes 53B.

The front end of the lower wall 51D has a protruding portion 55. The protruding portion 55 protrudes forward beyond the mounting surfaces 52R, 52L. An upper surface 55A of the protruding portion 55 is inclined downward toward the front. The frame cover 20 and the lower cover 85 are disposed on an upper side of the upper surface 55A (see FIGS. 1 to 4).

A moving body 56 includes a plate member 56A, and sliding members 57R, 57L, 58R, and 58L. The plate member 56A is disposed at the lower end of the column 5.

The sliding members 57R and 57L are disposed at the front end of the plate member 56A. The sliding member 57R is disposed at the right front end of the plate member 56A. A sliding member 57L is disposed at the left front end of the plate member 56A. The sliding members 57R, 57L are aligned at the same position in the front-back direction. A portion of each of the sliding members 57R, 57L is located further forward than the mounting surfaces 52R, 52L in a plan view (see FIG. 8). The sliding members 57R and 57L are rectangular boxes when viewed from the bottom. The sliding member 57R is able to slide in the front-back direction by being guided by the right guide 25 of the pair of guides 25 (see FIG. 5). The sliding member 57L is able to slide in the front-back direction by being guided by the left guide 25 of the pair of guides 25 (see FIG. 5). Hereinafter, when there is no need to distinguish between the sliding members 57R and 57L, they will be collectively referred to as the sliding members 57. It is sufficient that the sliding members 57R, 57L are at least partially further forward than the mounting surfaces 52R, 52L in plan view, or may be all forward as shown in FIG. 8.

The sliding members 58R, 58L (see FIG. 8) are disposed at the rear end portion of the plate member 56A. The sliding member 58R is disposed at the right rear end portion of the plate member 56A. The sliding member 58L is disposed at the left rear end portion of the plate member 56A. The sliding members 58R, 58L are aligned at the same position in the front-back direction. The sliding members 58R, 58L are located further rearward than the mounting surfaces 52R, 52L in a plan view (see FIG. 8). The sliding members 58R and 58L are rectangular boxes when viewed from the bottom. The sliding member 58R is able to slide in the front-back direction by being guided by the right guide 25 of the pair of guides 25 (see FIG. 5). The sliding member 58L is able to slide in the front-back direction by being guided by the left guide 25 of the pair of guides 25 (see FIG. 5). Hereinafter, when there is no need to distinguish between the sliding members 58R and 58L, they will be collectively referred to as the sliding members 58.

The operation of the machine tool 1 during machining of the workpiece 99 will be described with reference to FIG. 1 to FIG. 5, and FIG. 9. When the CPU of the control panel reads a Z-axis feed command in the NC program, it drives the motor of the Z-axis moving mechanism 12. The sliding members 57 and 58 are guided by the pair of guides 25 and slide forward. The spindle 7 advances along the Z axis to a position on the rotary table 9 close to the workpiece 99 and the tool 91.

The CPU drives the spindle motor to rotate the spindle 7. In this state, the CPU drives the motors of the X-axis moving mechanism 11, the Z-axis moving mechanism 12, and the Y-axis moving mechanism 13 based on the commands of the NC program to move the spindle 7 relative to the workpiece 99, thereby machining the workpiece 99.

When the spindle 7 moves in the up-down direction by the Y-axis moving mechanism 13, the lower cover 85 expands and contracts in the up-down direction according to the height of the spindle head 6. When the spindle 7 is positioned at the lower end of its movement range in the up-down direction (see FIGS. 2 and 4), the plurality of metal plates of the lower cover 85 overlap in a downwardly inclined state as they move forward from the lower end of the spindle head 6. In the protruding portion 55 located on the lower side of the lower cover 85, the upper surface 55A is inclined downward toward the front. Therefore, when the spindle 7 is moved in the up-down direction by the Y-axis moving mechanism 13, the protruding portion 55 does not interfere with the expansion and contraction of the lower cover 85 in the up-down direction.

As shown in (a) of FIG. 9, the sliding member 57 is disposed below the protruding portion 55, with a portion thereof disposed further forward than a mounting surface 52. A column 60 shown in (b) of FIG. 9 is a column having a conventional structure as a comparative example. The column 60 includes a mounting surface 72R, a moving body 76, the spindle head 6, and the frame cover 20. The moving body 76 includes sliding members 77 (77R, 77L) and 78 (78R, 78L). The mounting surface 72R, the moving body 76, and the sliding members 77 (77R, 77L), 78 (78R, 78L) are configured to correspond to the mounting surface 52R, the moving body 56, and the sliding members 57 (57R, 57L), 58 (58R, 58L) of the column 5 of the present invention, respectively. The column 60 differs from the column 5 of the present invention in that it does not include the protruding portion 55 of the present invention, and the entire sliding member 77 is located further rearward than the mounting surface 72R.

As shown in (a) of FIG. 9, in the column 5, an intersection point between an imaginary line connecting the sliding members 57R and 58L and an imaginary line connecting the sliding members 57L and 58R is designated as Q1. As shown in (b) of FIG. 9, in the column 60, an intersection point between an imaginary line connecting the sliding members 77R and 78L and an imaginary line connecting the sliding members 77L and 78R is designated as Q2. A distance L1 between the intersection point Q1 and the front end of the tool 91 is shorter than a distance L2 between the intersection point Q2 and the front end of the tool 91.

Here, when the machine tool 1 machines the workpiece 99, the columns 5 and 60 may be twisted horizontally relative to the base 2 due to a reaction force from the workpiece 99. As the columns 5 and 60 twist horizontally, the tool 91 twists horizontally. The rotation centers of the torsion when the entire columns 5 and 60 twist horizontally become the intersection points Q1 and Q2 defined by the positional relationship of the sliding members 57, 58, 77, and 78. The displacement of the tool 91 due to torsion becomes smaller as the distances L1, L2 between the intersection points Q1, Q2 and the front end of the tool 91 become shorter. Since the distance L1 is shorter than the distance L2, the displacement of the tool 91 on the column 5 due to torsion is smaller than the displacement of the tool 91 on the column 60 due to torsion.

As described above, in the machine tool 1, the spindle head 6 extends in the Z-axis direction and is disposed on the front surface the column 5 by the Y-axis moving mechanism 13. The rotary table 9 is located in front of the spindle head 6. The spindle head 6 is able to move in the Y-axis direction by being guided by the pair of guides 24 mounted on the mounting surfaces 52R, 52L of the column 5 (up-down direction). The mounting surface 52R is located at the left front end of the right wall 51A. The mounting surface 52L is located at the right front end of the left wall 51B. The column 5 is movable in the Z-axis direction (front-back direction) through the sliding members 57 and 58 being guided by the pair of guides 25. A portion of the sliding member 57 is located further forward than the mounting surface 52 in a plan view. The distance L1 between the intersection point Q1 on the column 5 and the front end of the tool 91 is shorter than the distance L2 between the intersection point Q2 on the column 60 of conventional structure and the front end of the tool 91. The displacement of the tool 91 due to torsion becomes smaller as the distances L1, L2 between the intersection points Q1, Q2, which are the rotation centers of the torsion, and the front end of the tool 91 become shorter. Since the distance L1 is shorter than the distance L2, the displacement of the tool 91 in the column 5 due to torsion is smaller than the displacement of the tool 91 in the column 60 of conventional structure due to torsion. Therefore, the column 5 can reduce displacement due to torsion when the workpiece 99 is machined.

A portion of the sliding member 57 is located further forward than the mounting surfaces 52R and 52L in a plan view. The sliding member 58 is located further rearward than the mounting surfaces 52R, 52L in a plan view. The sliding member 57 and the sliding member 58 are disposed with the mounting surfaces 52R and 52L therebetween in the front-back direction in a plan view. This allows the sliding members 57, 58 to guide the column 5 more stably than when both are positioned further forward than the mounting surfaces 52R, 52L. Therefore, the column 5 is can move stably in the front-back direction.

The protruding portion 55 is located further forward than the mounting surface 52. The upper surface 55A of the protruding portion 55 is inclined downward toward the front. The lower cover 85 is disposed on the upper side of the upper surface 55A. When the spindle 7 is located at the lower end of its movement range in the up-down direction, the plurality of metal plates of the lower cover 85 overlap in a state of being inclined downward as they move forward from the lower end of the spindle head 6. Since the upper surface 55A of the protruding portion 55 is inclined downward as it moves forward, when the spindle 7 is moved in the up-down direction by the Y-axis moving mechanism 13, the protruding portion 55 does not interfere with the expansion and contraction of the lower cover 85 in the up-down direction. Since the upper surface 55A of the protruding portion 55 is inclined downward as it moves forward, the column 5 may be supported without reducing rigidity. Therefore, the column 5 can move stably in the front-back direction.

The spindle 7 extends in the Z-axis direction (front-back direction). In the case where the spindle 7 extends horizontally, when the column 5 twists horizontally, the tool 91 extending coaxially with the spindle 7 also twists horizontally. Therefore, the torsional displacement at the front end of the tool 91 is likely to become large. The rotation centers of the torsion when the entire columns 5 and 60 are twisted horizontally become the intersection points Q1 and Q2 defined by the positional relationship of the sliding members 57, 58, 77, and 78. The displacement of the tool 91 due to torsion becomes smaller as the distances L 1, L2 between the intersection points Q1, Q2 and the front end of the tool 91 become shorter. Since the distance L1 is shorter than the distance L2, the displacement of the tool 91 in the column 5 due to torsion is smaller than the displacement of the tool 91 in the column 60 of conventional structure due to torsion. Therefore, the machine tool 1 can reduce displacement due to torsion during machining of the workpiece 99 even when the spindle 7 extends horizontally.

In the above embodiment, the base 2 is an example of a foundation of the present invention. The workpiece 99 is an example of a work material. The rotary table 9 is an example of a workbench of the present invention. The guide 24 is an example of an up-down guide portion of the present invention. The Z-axis direction (front-back direction) is an example of an intersecting direction in the present invention. The sliding members 57 and 58 are an example of an intersection guide portion of the present invention. The sliding member 57 is an example of a first intersection guide portion of the present invention. The sliding member 58 is an example of a second intersection guide portion of the present invention.

The present invention is not limited to the above-described embodiment, and various modifications are possible. The various modified examples described below may be combined with each other as long as no contradiction occurs. For example, although the machine tool 1 in the above embodiment is a lateral machine tool in which the spindle 7 extends horizontally, the present invention may also be applied to a vertical machine tool in which the spindle extends in the up-down direction.

In the column 5, the positional relationship between the sliding members 57, 58 and the mounting surfaces 52R, 52L may be changed as follows. It is sufficient that the sliding members 57R, 57L are at least partially disposed further forward than the mounting surfaces 52R, 52L, and the sliding members 57R, 57L may be partially located further rearward than the mounting surfaces 52R, 52L. The sliding members 57, 58 may both be disposed further forward than the mounting surfaces 52R, 52L. In this case, it is sufficient that the sliding members 57 and 58 are located further rearward than the rotary table 9. The sliding member 58 may be disposed in the center portion of the plate member 56A in the front-back direction. In this case, the intersection point Q1 is closer to the front end of the tool 91, and the distance L1 is shorter. Therefore, the column 5 can further reduce the displacement of the tool 91 due to torsion.

The upper surface 55A of the protruding portion 55 does not have to be inclined downward and forward. For example, the upper surface 55A may be a horizontal surface.

It is sufficient that the sliding members 57 and 58 may be configured to move along the pair of guides 25. For example, instead of the sliding members 57 and 58, rollers that roll on the pair of guides 25 may be used.

The rotary table 9 may move in at least one of the X-axis direction, the Y-axis direction, and the Z-axis direction. The rotary table 9 may rotate about the X-axis.

### [Reference Signs List]

1. Machine tool
5. Column
7. Spindle
52R, 52L Mounting surface
55 Protruding portion
56 Moving body
57, 58 Sliding member (intersection guide portion)

## Claims

1. A column, disposed at an interval from a workbench that fixes a work material on an upper side of a foundation of a machine tool and supporting a spindle head that holds a spindle, the column comprising:
a mounting surface, disposed on a surface facing the workbench for mounting an up-down guide portion that guides a movement of the spindle head in an up-down direction; and
an intersection guide portion, disposed on a lower wall and guiding a movement of the column in an intersecting direction intersecting the up-down direction,
wherein in a plan view, at least a portion of the intersection guide portion is closer to the workbench than the mounting surface.

2. The column according to claim 1,
wherein the intersection guide portion includes a first intersection guide portion, and a second intersection guide portion disposed further on an opposite side to the workbench than the first intersection guide portion, and
wherein in plan view,
the first intersection guide portion is closer to the workbench than the mounting surface.

3. The column according to claim 2,
wherein the lower wall has a protruding portion that protrudes toward the workbench than the mounting surface, and
the protruding portion is supported from below by the first intersection guide portion, and an upper end thereof is inclined downward toward the workbench.

4. A machine tool, comprising the column according to claim 3.

5. The machine tool according to claim 4, wherein the spindle extends horizontally.
